# EUROPEAN PATENT APPLICATION

(11) **EP 1 983 476 A1**
(43) Date of publication of application: **22.10.2008**
(21) Application number: 07106292.1
(22) Date of filing: 17.04.2007
(51) Int. Cl.: G06Q 10/00

(54) **Method for tracing at least a determinate material, within the range of a plurality of raw materials, used to make a product**

(71) Applicant: TNT di Tantolo Franco e Mauro snc, 33048 S. Giovanni al Natisone (UD) (IT)
(72) Inventor: Tantolo, Mauro, Cormons (GO) 34071 (IT)
(74) Representative: Petraz, Gilberto Luigi

(57) **Abstract**

A method (10) for tracing at least a determinate material within the range of a plurality of raw materials used to make a product, comprises at least a first step (25), in which said determinate material is identified with respect to the other raw materials and a first identification code is associated with said determinate material, and a second step (31, 33) in which a second identification code, derived from the first identification code, is associated with the product, for the univocal identification in the product of the determinate material.

## Description

### FIELD OF THE INVENTION

The present invention concerns a method for tracing at least a determinate material, within the range of a plurality of raw materials used to make a product, here and hereafter also called article.

### BACKGROUND OF THE INVENTION

As is known, a product is made by subjecting raw materials to various successive workings. Often it is necessary that the product must have determinate characteristics, for example that it is fireproof, so that the raw materials of which it is made must not contain flammable materials, but fireproof materials.

However, especially if the product is made in a large number of pieces, mistakes can easily occur in the choice of the materials within the range of the raw materials, with the risk of making products that do not correspond to the required characteristics.

It is also known to carry out checks on the products, intended to assess that the products correspond correctly to such characteristics; however, such checks are normally made, for economic reasons, not on the entire production, but only on some samples.

Given that normally these materials are not directly visible or accessible from outside, these checks require long and laborious operations to dismantle the product which, once dismantled, must be re-assembled, thus lengthening the overall production times.

One purpose of the present invention is to perfect a method for tracing at least a determinate material within the range of raw materials used to make a product, which will allow to keep track of the determinate material quickly, simply and economically and on every piece of production, without the disadvantages of the state of the art.

Another purpose of the present invention is to perfect a method which will allow to trace said material during the various working steps of the raw materials.

The Applicant has devised, tested and embodied the present invention to overcome the shortcomings of the state of the art, and to obtain these and other purposes and advantages.

### SUMMARY OF THE INVENTION

The present invention is set forth and characterized in the main claim, while the dependent claims describe other characteristics of the present invention, or variants to the main inventive idea.

In accordance with the above purposes, a method according to the present invention is used for tracing at least a determinate material within the range of a plurality of raw materials, used to make a product.

According to a characteristic of the present invention, the method comprises at least a first step, in which the determinate material is identified with respect to the other raw materials and a first identification code is associated with it, and a second step in which a second identification code, derived from the first identification code, is associated with the product, for the univocal identification in the product of the determinate material.

In this way, the method according to the invention allows to keep track of the determinate material from the raw materials to the final product, quickly, simply and economically and on every piece of production.

The first identification code is of the alphanumerical type and describes at least some of the characteristics of the determinate material, and at least one of the following data: the identity of the supplier of the determinate material; the date of reception of the determinate material; a code for the warehouse where the determinate material is stored; the volume and/or weight of the determinate material.

The raw materials can thus be stored in any known manner, but thanks to the invention the determinate material is always easily identifiable.

According to one embodiment of the invention, if the product consists of a plurality of elements, worked and/or semi-worked, the method also comprises, between the first and the second step, at least an intermediate step, or production step, during which a respective intermediate identification code, derived from the first identification code, is associated with every element so as to univocally identify the determinate material, also in the element. The second identification code derives in this way from the plurality of intermediate identification codes associated with the plurality of elements.

If from the working of the raw materials there are scraps left over, the intermediate step comprises at least a sub-step in which, with respect to the scraps of the other raw materials, the scraps of the determinate material are identified, and the first identification code is associated with them, which also indicates the correct quantity of said material remaining.

Moreover, if the product and/or the plurality of elements are packed, the method also comprises, after the second step, a packing step, in which a respective packing code is associated, derived from the second identification code, with the product and/or each element, for the univocal identification of the determinate material also in the product and/or the packed element.

In this way, the invention allows to keep track of the determinate material in each step of production and post-production, univocally identifying at least each element by means of the respective identification code.

According to an advantageous solution of the invention, the identification codes are represented, for example, by means of an alphanumerical string, and/or by means of a bar code for optical readings and can advantageously be printed on a support, for example a label. The determinate material is thus identified simply and quickly, in the various steps of the method, associating a respective label to the material or its container.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a block diagram of a sequence of some steps in a method according to the present invention for tracing at least a determinate material;
- fig. 2 shows a label used to identify the determinate material;
- fig. 3 is a block diagram of a sequence of sub-steps of a first step of the method in fig. 1;
- fig. 4 is a block diagram of a sequence of sub-steps of a second step of the method in fig. 1;
- fig. 5 is a block diagram of a sequence of sub-steps of a third step of the method in fig. 1;
- fig. 6 is a block diagram of a sequence of further sub-steps of the third step in fig. 5;
- fig. 7 is a block diagram of a sequence of sub-steps of a fourth step of the method in fig. 1;
- fig. 8 is a block diagram of a sequence of sub-steps of a fifth step of the method in fig. 1.

### DETAILED DESCRIPTION OF A PREFERENTIAL FORM OF EMBODIMENT

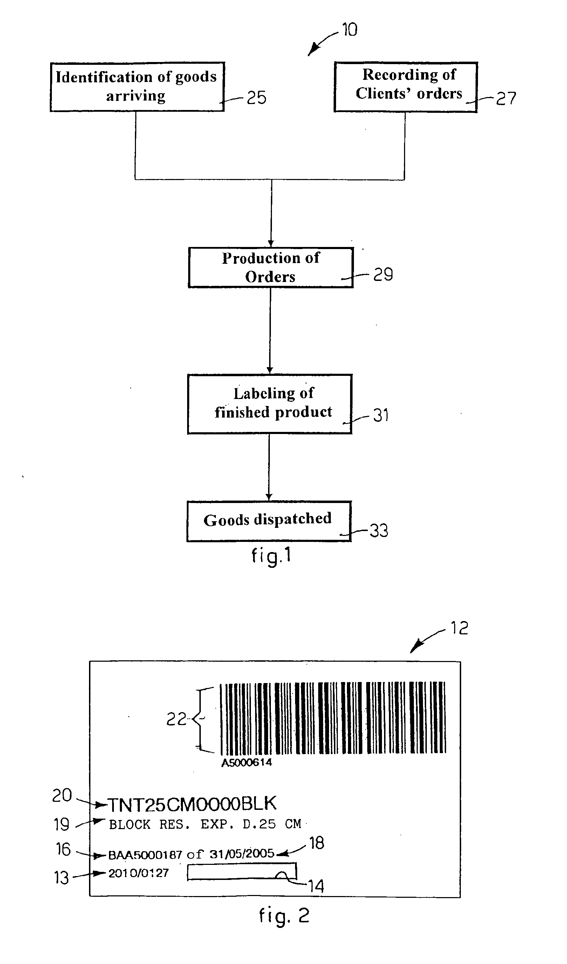

With reference to fig. 1, a method 10 according to the present invention is used for tracing at least a determinate material, for example a fireproof foam rubber, within the range of a plurality of raw materials present in a product, for example a chair.

Hereafter, we shall indicate a determinate quantity of raw material as "block".

We shall also use the following terminology:
- BIN, Block Identification Number: this is a number or code that is associated with each block and identifies it univocally
- GRS, Goods Reception Sheet: this is a document drawn up by an operator when the raw materials are received;
- BIL, Block Identification Label: this is a label that is affixed on every block allowing to identify it univocally;
- PL, Production Label (or WL, Working Label): this is a label that follows the semi-worked product from the first working step until packing;
- FL, Forwarding Label: this is a label that identifies each individual package of every element that makes up the product; and
- TD, Transport Document: this is a document that is provided by the supplier of the raw material (supplier's TD), or the purchase document (purchase TD), or the transport document of the product made.

Fig. 2 shows an example of a BIL 12, which has the following data:
- an identification code of the supplier 13 of the raw material;
- a space for the name of the supplier 14;
- the purchase TD 16 with which the block was registered when it was delivered;
- date of reception of the block 18;
- description of the material 19 of which the block is made;
- warehouse code 20 which identifies the material of which the block is made; and
- BIN 22, which is printed both in bar code format or another code legible advantageously by means of optic sensors, and also in alphanumerical format.

The GRS comprises a heading and a table: the purchase TD, the date of creation of the GRS, the identification number of the supplier, the name of the supplier, the date of arrival of the raw material and the supplier's TD are inserted in the heading, for example automatically.

The table consists of two columns and a number of lines equal to the number of BIN generated for the purchase TD to which the GRS refers (for example six).

The first column contains the list of BINs, while the second is compiled by the operator who inserts for each BIN the characteristics (batch and type of material) of the corresponding block.

The PLs are associated with the various elements which make up the product, in order to identify them univocally in the various working steps. The PLs indicate not only the number of pieces present and the number of pieces in hand, but also the Job Order number (described hereafter), to which the various elements refer, and a BIN which identifies the element univocally in relation to the relative Job Order: The BIN of the PLs allows to print the FLs, on which the date of packing, the description of the element packed and the warehouse code that identifies the element are printed.

A Packing List is also prepared, in which the TD number is indicated to which it refers, the Job Order number, the list of materials used and the respective producers and batches.

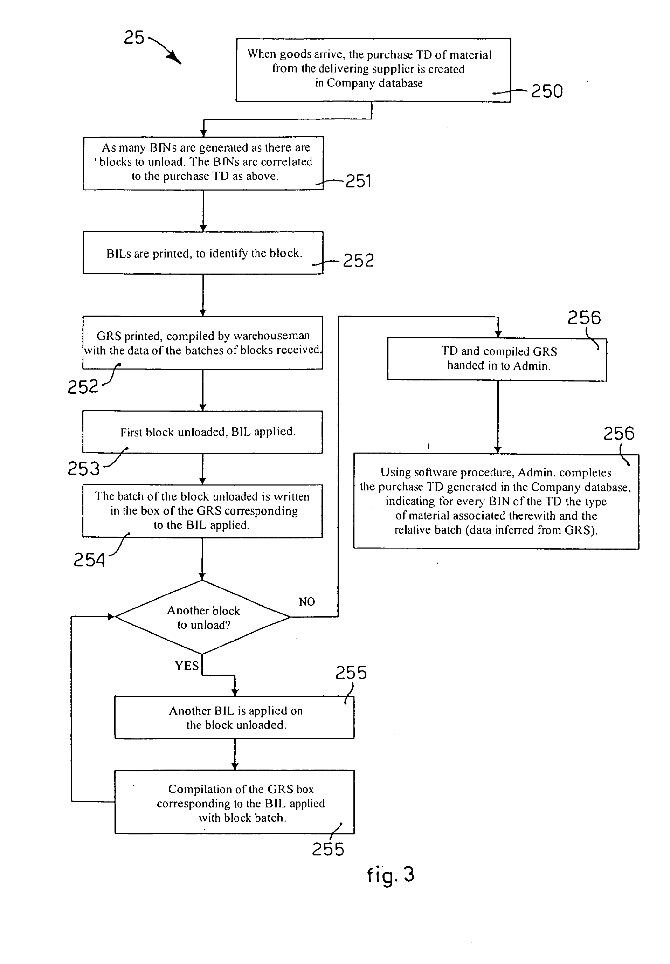

The method 10 according to the present invention comprises a first step 25, or identification step (fig. 3), having a first sub-step 250 in which the blocks of raw material are univocally identified when they arrive in the warehouse.

In a second sub-step 251, the operator identifies at least the name of the supplier and the number of blocks delivered, in order to define, for example automatically, the purchase TD, with which the same number of BINs are univocally associated as there are blocks delivered.

In a third sub-step 252, automatically, the BILs to be applied to each block are printed, and a GRS which is compiled by the operator, in this case a warehouseman.

Until this sub-step 252, the type of material present in the various blocks is still not known, and therefore the BIL is printed without code and description of the type of material.

In a fourth sub-step 253, or unloading sub-step, the operator applies a BIL on every block and writes the batch number and the type of corresponding material in the relative box of the GRS. The batch and type of material are detected by the operator based on what the producer of the block has declared.

In a fifth sub-step 254, or compilation sub-step, the operator completes the purchase TD, which has as many lines as there are BINs, and which is completed by inserting for each BIN the type of material and the batch, taken from the GRS.

In a sixth sub-step 255, the operations of applying the BIL and the compilation of the relative box of the GRS are repeated, until all the blocks are unloaded.

In a seventh sub-step 256, with every single block present in the warehouse, the BIN is associated, in turn univocally correlated with the batch, the producer of the block, the date of delivery, the supplier's TD and the supplier's batch. The BILs that are printed thus contain the complete identification data of the BIN.

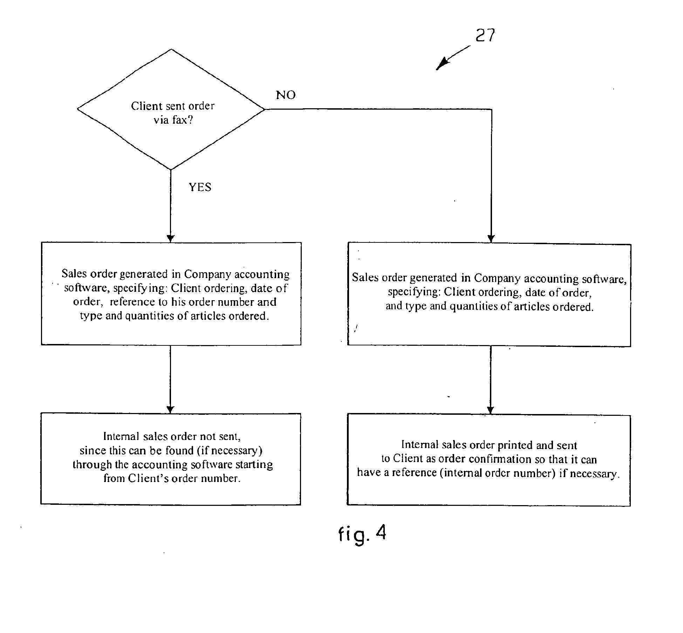

When a client orders a determinate quantity of a product, during a second step 27 of the method 10 (figs. 1 and 4), an operator processes the order, for example by means of an electronic calculator, defining a Sales Order, specifying the name of the client ordering, the date of the order, the reference to his order number, the articles ordered and the respective quantity.

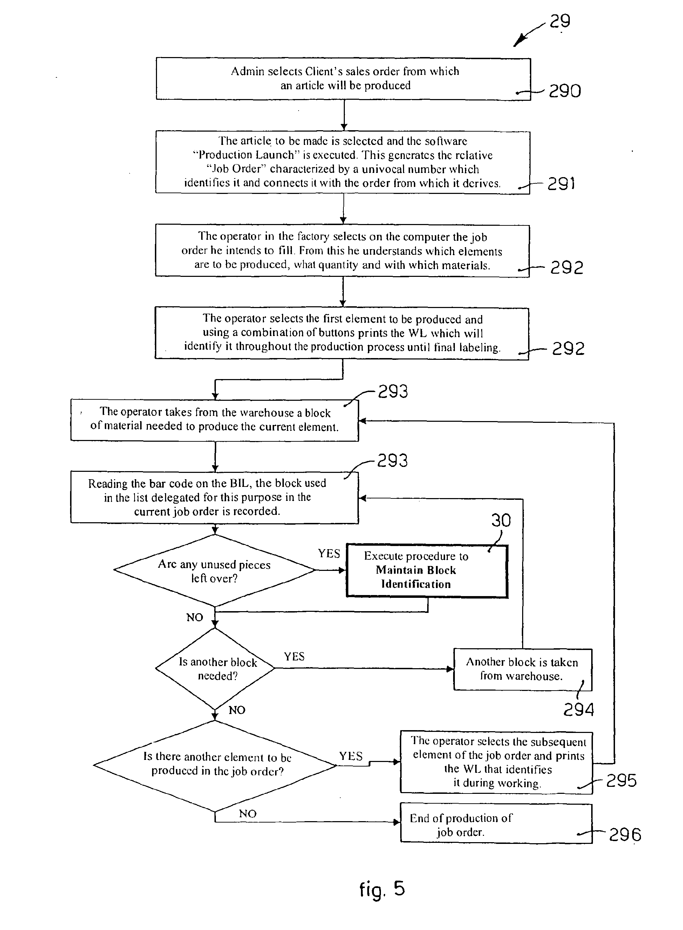

During a third step 29 (figs. 1 and 5), the operator selects the Sales Order (first sub-step 290) and, by means of the Sales Order, the product (second sub-step 291) that is to be made and the quantity of production, and defines a document called Job Order, inserting:
- an identification number that identifies the Job Order univocally and correlating it to the Sales Order;
- a series of lines that represent the list of all the elements necessary to make the article with the respective quantities and the list of the types of materials and relative quantities to be used during the production step;
- a list containing the BIN of each block that is used on each occasion in making the product.

In a third sub-step 292, the operator selects the Job Order to be filled, and the first element to be made, and prints a WL that identifies univocally the selected element.

In a fourth sub-step 293, the operator takes the material for the production of the element from the warehouse and records the BIN or BIN of the block taken in the list of the Job Order, for example by means of a bar code reader.

If another block is needed to make the first element, the operator takes it in a fifth sub-step 294 from the warehouse.

In a sixth sub-step 295, the operator selects all the elements that make up the product to be made, in sequence and until they are finished, and prints the relative WL, memorizing the BIN of the blocks to be used. The seventh sub-step 296 indicates the end of the production of the Job Order.

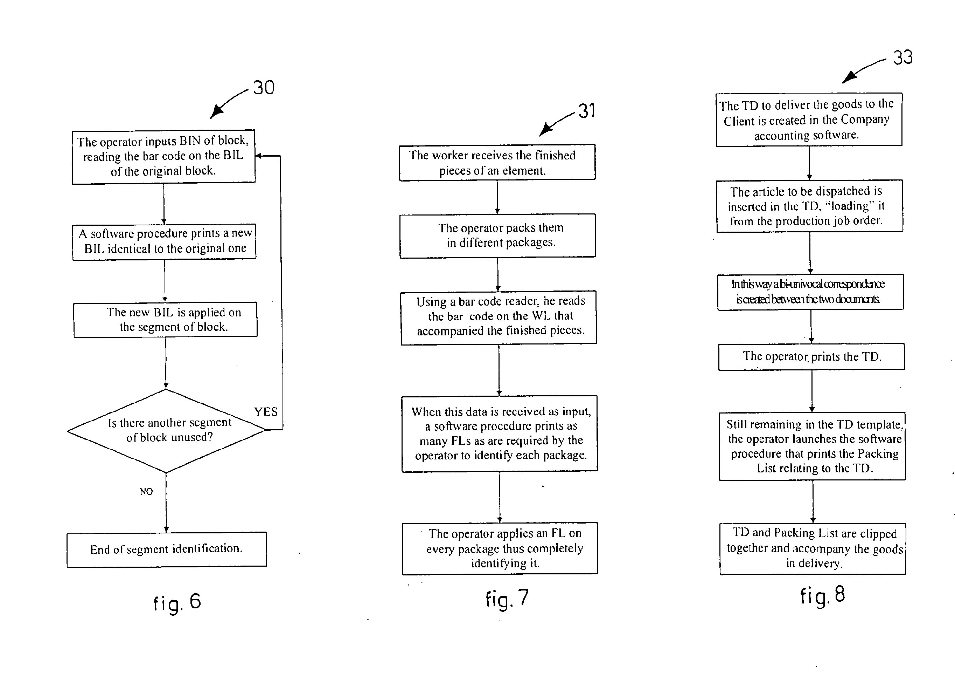

If, at the end of the fourth sub-step 293, there are working scraps, a sub-step 30 is performed (figs. 5 and 6), in which new BIL are printed, with the same BIN as the original block, in the same number as the surplus pieces.

During a fourth step 31 of the method 10 (fig. 7), the operator receives the various pieces that make up the product, identifies the various elements by means of the relative WL to print the FL to be applied to each package of said element, to identify it univocally. The fourth step 31 is repeated for all the pieces of every element of every single sample of product. At the end of the fourth step 31, all the finished parts of the product are identified with the respective FL.

During a fifth step 33 of the method 10 (fig. 8), the transport TD is automatically created, by inserting the characteristics of the product made starting from the data of the Job Order, so that Job Order and transport TD are closely correlated to each other. In this fifth step 33 the Packing List is also printed.

The method 10 as described heretofore therefore allows to keep track of determinate materials from their arrival during all the production steps and until the finished product is dispatched, simply and on every single sample.

It is clear that modifications and/or additions of steps may be made to the method 10 as described heretofore, without departing from the field and scope of the present invention.

It is also clear that, although the present invention has been described with reference to some specific examples, a person of skill in the art shall certainly be able to achieve many other equivalent forms of method for tracing at least a determinate material, within the range of a plurality of raw materials, used to make a product, having the characteristics as set forth in the claims and hence all coming within the field of protection defined thereby.

## Claims

1. Method for tracing at least a determinate material within the range of a plurality of raw materials used to make a product, **characterized in that** it comprises at least a first step (25), in which said determinate material is identified with respect to the other raw materials and a first identification code is associated with said determinate material, and a second step (31, 33) in which a second identification code, derived from said first identification code, is associated with said product, for the univocal identification in said product of said determinate material.

2. Method as in claim 1, **characterized in that** said first identification code is of the alphanumerical type and describes at least some characteristics of said determinate material.

3. Method as in claim 2, **characterized in that** said first identification code also describes at least one of the following data: the identity of the supplier of said determinate material; the date of reception of said determinate material; a code of the warehouse in which said determinate material is stored; the volume and/or weight of said determinate material.

4. Method as in claim 1, 2 or 3, **characterized in that** said first step (25) comprises at least a first sub-step (252) in which said first identification code is printed on a support (BIL).

5. Method as in any claim hereinbefore, wherein said product consists of a plurality of elements, worked and/or semi-worked, **characterized in that** between said first step (25) and said second step it also comprises an intermediate step (29) or production step, during which a respective intermediate identification code, derived from said first identification code, is associated with every element of said plurality of elements, for the univocal identification of every element of said determinate material.

6. Method as in claim 5, **characterized in that** said second identification code derives from the plurality of intermediate identification codes associated with said plurality of elements.

7. Method as in claim 5 or 6, wherein there are scraps from the working of said raw materials, **characterized in that** said intermediate step (29) comprises at least a first sub-step (30) in which, with respect to the scraps of the other raw materials, the scraps of said determinate material are identified, and said first identification code is associated with said scraps of said determinate material.

8. Method as in claim 5, 6 or 7, **characterized in that** said intermediate step (29) comprises at least a second sub-step (293) in which said intermediate identification code is printed on a support (WL, PL).

9. Method as in any claim from 5 to 8, wherein said product and/or said plurality of elements are packed, **characterized in that** after said second step, it also comprises a packing step (31), in which a respective packing code, derived from said second identification code, is associated with each product and/or with each element of said plurality of elements, for the univocal identification of said determinate material also in said packed product and/or in said packed element.

10. Method as in claim 9, **characterized in that** said packing step (31) comprises at least a sub-step in which said packing code is printed on a support (FL).

11. Method as in any claim hereinbefore, **characterized in that** said identification codes can be printed in a format legible by optical sensors.

12. Method as in any claim hereinbefore, **characterized in that** said identification codes can be printed as bar codes.
